# EUROPÄISCHE PATENTANMELDUNG

(11) **EP 0 569 738 A1**
(43) Veröffentlichungstag der Anmeldung: **18.11.1993**
(21) Anmeldenummer: 93106422.4
(22) Anmeldetag: 21.04.1993
(51) Int. Cl.: F04D 25/08, H02K 9/06

(54) **Kommutator-Kleinmotor**

(30) Priorität: 12.05.1992 DE 4215504
(71) Anmelder: ROBERT BOSCH GMBH, 70442 Stuttgart (DE)
(72) Erfinder: Lungu, Corneliu, Dipl.-Ing., W-7582 Bühlertal (DE)

(57) **Zusammenfassung**

Bei einem Kommutator-Kleinmotor, insbesondere Kühlerlüftermotor für Kraftfahrzeuge, der einen auf einer Rotorwelle (12) mit Kommutator (16) sitzenden Rotor (10) und ein den Stator (11) bildendes, Rotor (10) und Kommutator (16) überziehendes, an beiden Stirnseiten mit einem Lagerschild (21,22) abgeschlossenes, im Vergleich zum Durchmesser langen Polrohr (19) aufweist, sind zum Zwecke der Intensivierung des Luftaustauschs im Motorinnern und dadurch verbesserter Wärmeabfuhr in dem vom Kommutator (16) abgekehrten vorderen Lagerschild nahe der Rotorwelle (12) Abluftöffnungen (47) eingebracht, die von einer zur Rotorwelle (12) koaxialen Ansaugöffnung (45) eines von der Rotorwelle (12) angetriebenen Radialgebläses (37) überdeckt sind. Den Luftaustausch ermöglichende Zuluftöffnungen (46) sind entweder im hinteren Lagerschild (22) oder ebenfalls im vorderen Lagerschild (21) vorgesehen, die dann gegenüber den Abluftöffnungen (47) gegen unmittelbaren Luftaustausch abgeschirmt sind.

## Beschreibung

### Stand der Technik

Die Erfindung geht aus von einem Kommutator-Kleinmotor, insbesondere Kühlerlüftermotor für Kraftfahrzeuge, der im Oberbegriff des Anspruchs 1 definierten Gattung.

Zur Erhöhung des Wirkungsgrades solcher Kleinmotoren, die als Kühlerlüftermotoren in Kraftfahrzeugen noch der erheblichen Wärmestrahlung der Brennkraftmaschine ausgesetzt sind, ist es erforderlich, die Motorwärme ausreichend abzuführen und thermische Engpässe bei der Wärmeabfuhr zu vermeiden.

Bei einem bekannten elektrischen Antriebsmotor für ein Radialgebläse (DE 29 50 060 C2) hat man zu diesem Zweck einen Kühlluftkanal vorgesehen, der rinnenartig in einer an dem Spiralgehäuse des Radialgebläses angeformten Aufnahmetasche für den Elektromotor ausgebildet ist und in dem Spiralgehäuse im äußeren Bereich des Lüfterrades mündet. Eine solche Verbesserung der Kühlung des Antriebsmotors ist von seinem Einsatz in einem Radialgebläse abhängig.

### Vorteile der Erfindung

Der erfindungsgemäße Kommutator-Kleinmotor mit den kennzeichnenden Merkmalen des Anspruchs 1 oder des Anspruchs 11 hat den Vorteil einer Intensivierung des Luftaustausches im Motorinnenraum durch motoreigene konstruktive Maßnahmen, die nicht von dessen speziellem Einsatzzweck abhängig sind. Durch die verbesserte Kühlung läßt sich die Leistungsausbeute
steigern, so daß kleinere Motoren dort eingesetzt werden können, wo heute noch baugrößere Motoren verwendet werden. Dadurch wiederum sind Einbau- und Gewichtsvorteile gegeben. Baukleinere Motoren haben bei gleicher Leistung ein wesentlich günstigeres Verhältnis von Anlauf- und Betriebsstrom und schonen dadurch Batterie und Steuerkontakte im Kraftfahrzeug.

Bei bevorzugt zweipolig ausgeführten, länglichen Motoren, bei welchen das Verhältnis von Durchmesser zur axialen Länge des Polrohrs klein ist, wird ein solcher Luftaustausch gemäß dem kennzeichnenden Merkmal des Anspruchs 1 durch ein radiales Sauggebläse aktiviert, das sich außerhalb des Motors befindet und von der Rotorwelle angetrieben wird. Dieses Radialgebläse saugt erwärmte Luft aus dem Motorinnenraum durch rotorwellennahe Luftöffnungen heraus, die im vorderen Lagerschild angebracht sind. Diese Luft wird durch Frischluft ersetzt, die in den Motorinnenraum durch die Zuluftöffnungen im hinteren oder vorderen Lagerschild strömt.

Durch die in den weiteren Ansprüchen 2 - 10 aufgeführten Maßnahmen sind vorteilhafte Weiterbildungen und Verbesserungen des im Anspruch 1 angegebenen Kommutator-Kleinmotors möglich.

Bei Verwendung des Kommutator-Kleinmotors als Kühlerlüftermotor in Fahrzeugen sitzt auf dem aus dem vorderen Lagerschild vorstehenden Wellenende der Rotorwelle drehfest das Lüfterrad, das mit einer Lüfternabe das Gehäuserohr kappenartig übergreift und davon wegstrebende Lüfterflügel aufweist. In einem solchen Fall wird das Radialgebläse nach einer bevorzugten Ausführungsform der Erfindung durch entsprechende konstruktive Maßnahmen in der Lüfternabe realisiert, und kann dadurch äußerst kostengünstig hergestellt werden. Bevorzugt wird dabei in der Lüfternabe im Abstand von deren Nabengrund eine Schale eingesetzt, die mit der Lüfternabe einen mit einer Ausblasöffnung versehenen Strömungsraum einschließt und mittig zu einem zur Rotorwelle koaxialen Ansaugestutzen ausgeformt ist, der die Ansaugöffnung des Radialgebläses umschließend nach Art einer rotierenden Dichtung an dem vorderen Lagerschild angrenzt. Im Strömungsraum zwischen Schale und Nabengrund sind radial sich erstreckende Gebläseschaufeln angeordnet.

Bei einem solchen Kühlerlüftermotor werden bevorzugt die Zuluftöffnungen im vorderen Lagerschild nahe dem Gehäuserohr angeordnet und umgeben dabei etwa halbkreisförmig die Abluftöffnungen. Die Zuluftöffnungen liegen dabei bevorzugt in dem in der Motorgebrauchslage oberen und seitlichen Bereich des vorderen Lagerschildes. Die Zuluft- und Abluftöffnungen sind auf der Außenseite des vorderen Lagerschilds durch den in der Lüfternabe ausgebildeten Ansaugstutzen voneinander getrennt, und auf der Innenseite des vorderen Lagerschildes verhindert eine an dem vorderen Lagerschild befestigte Trennwand einen unmittelbaren Luftaustausch zwischen den Zuluft- und den Abluftöffnungen. Diese Ausführungsform des Kühlerlüftermotors bietet den besten Schutz gegen Eindringen von Verschmutzungen.

In einer bevorzugten Ausführungsform der Erfindung ist die Trennwand aus Weichkunststoff hergestellt und bis an die vorderen Wickelköpfe der Ankerwicklung geführt, wobei sie an den Wickelköpfen schleifend anliegt. Bei rotierendem Rotor nutzt sich der Weichkunststoff ab, ohne die Wicklung zu beschädigen, und verhilft auf diese Weise zu einer ausreichenden Lufttrennung, ohne zu enge Toleranzanforderungen an die Wickelköpfe zu stellen.

Alternativ kann gemäß einer weiteren Ausführungsform der Erfindung die Trennwand mit U-förmigem Verlauf über die Wickelköpfe hinweg bis zum Blechpaket des Rotors geführt werden.

Die Ausblasöffnung des in der Lüfternabe integrierten Radialgebläses wird gemäß einer weiteren Ausführungsform der Erfindung dadurch realisiert, daß die Schale becher- oder topfartig ausgebildet und so in die Lüfternabe eingesetzt ist, daß zwischen der zylinderförmigen Topfseitenwand und der zylinderförmigen Nabenseitenwand der Lüfternabe ein mit dem Strömungsraum am Kappengrund in Verbindung stehender Ringraum entsteht. Die Mündung dieses Ringraums am Naben- bzw- Schalenrand ist die Ausblasöffnung des Radialgebläses.

Alternativ hierzu kann, wie eine weitere Ausführungsform der Erfindung zeigt, die bevorzugt aus Kunststoff gefertigte Schale auch parallel zum Nabengrund der Lüfternabe bis zu der zylinderförmigen Nabenseitenwand geführt und dort befestigt werden. Die Ausblasöffnung des Radialgebläses wird dann von Radialbohrungen gebildet, die im Bereich des Strömungsraums in die Nabenseitenwand eingebracht sind. Diese Ausführungsform hat den Vorteil, daß die heiße Abluft in der Niedrigstdruckzone der Lüfternabe strömt. Die Radialbohrungen können dabei in Drehrichtung gesehen sowohl vor als auch hinter den Lüfterflügeln angebracht werden.

Gemäß einer weiteren Ausführungsform der Erfindung sind zur Kühlung der Kommutatorbürsten an den Bürstenführungen radial zur Rotorwelle ausgerichtete, vorzugsweise mit diesen einstückige Kühlbleche angeordnet, die sich in Achsrichtung des Rotors bis nahe an die hinteren Wickelköpfe der Ankerwicklung erstrecken.

Bei sog. Kompaktmotoren, bei welchen das Verhältnis von Durchmesser zur axialen Länge des Polrohrs recht groß ist, läßt sich der Wärmeentzug aufgrund der Kurzbauweise des Kommutator-Kleinmotors besonders wirkungsvoll erreichen. Durch die im Kennzeichenteil des Anspruchs 11 angegebenen konstruktiven Maßnahmen wird die Radiallüfterwirkung des Rotors für den Luftaustausch verstärkt und gezielt genutzt. Die vom Rotor angesaugte Luft spaltet sich dabei in zwei scheibenförmige, radial verlaufende Luftströme auf, die vor und hinter dem Rotor in Drehbewegung versetzt werden. Durch die wellennahen axialen Luftkanäle im Rotor gelangen dabei ausreichende Luftmengen hinter den Rotor. Durch die wellennahen Zuluftöffnungen und die maximal davon entfernt nahe dem Polrohr liegenden wellenfernen Abluftöffnungen wird die Luftförderwirkung des Rotors maximal genutzt.

Durch die in den weiteren Ansprüchen 12 - 35 aufgeführten Maßnahmen sind vorteilhafte Weiterbildungen und Verbesserungen des im Anspruch 11 angegebenen Kommutator-Kleinmotors möglich.

Bei einer vorteilhaften Ausführungsform der Erfindung ist auf der dem vorderen Lagerschild zugekehrten Stirnseite des Rotor-Blechpakets ein zum vorderen Lagerschild sich verjüngender, zur Rotorwelle koaxialer Trichter vorgesehen, der mit seiner durchmessergrößeren Stirnseite die Einlaßöffnungen der rotorwellennahen Luftkanäle überdeckt. In dem Trichter sind Luftleitstege derart ausgebildet, daß die an dessen durchmesserkleineren Seite einströmende Luft in Drehrichtung versetzt wird.

Alternativ können gemäß einer weiteren Ausführungsform der Erfindung auf der dem vorderen Lagerschild zugekehrten Stirnseite des Blechpakets unterhalb der Wickelköpfe Radialflügel über den Umfang des Rotors um gleiche Umfangswinkel verteilt angeordnet werden. Beide Maßnahmen dienen zur Verbesserung der Luftrotation vor und hinter dem Rotor und damit dem verstärkten Wärmeaustausch.

In einer weiteren Ausführungsform der Erfindung werden außerdem noch auf den Blechpaketstirnseiten im Bereich der Wickelköpfe raidale Luftführungskanäle ausgebildet, die am Außenumfang des Blechpakets münden. Diese radialen Luftkanäle haben nur kleine Querschnitte. Sowohl diese Luftkanäle als auch die vorstehend beschriebenen Radialflügel unterhalb der Wicklungsköpfe als auch der Trichter werden bevorzugt aus der Maskenisolation des Rotors ausgeformt.

Auch eine glattflächige Ausbildung der Innenseite des vorderen Lagerschildes, was gemäß einer weiteren Ausführungsform der Erfindung vorgesehen wird, trägt zur Verbesserung der Luftförderwirkung des Rotors bei.

Zur Trennung der Zu- und Abluftöffnungen im vorderen Lagerschild ist auf der Außenseite des vorderen Lagerschilds eine die Zuluftöffnungen überdeckende ringförmige Haube aufgesetzt, die einen in Radialrichtung sich erstreckenden Luftzuführungskanal aufweist, der zu einem von den Abluftöffnungen abgekehrten Bereich des vorderen Lagerschildes führt. Bei Kühlerlüftermotoren mit auf der Rotorwelle befestigtem Lüfterrad ist die Haube mit Luftzuführungskanal in dem zwischen Nabengrund des Lüfterrades und dem Lagerschild des Motors vorhandenen Zwischenraum aufgenommen, und der Luftführungskanal mündet nach axialer Umlenkung am Rand der kappenförmigen Lüfternabe.

Um die in den Mündungsbereich des Luftführungskanals einströmende Luftmenge zu vergrößern, ist gemäß einer weiteren Ausführungsform der Erfindung im Axialabstand von der Mündung des Luftzuführungskanals eine radial in den Axialluftstrom der Lüfterflügel hineinragende Luftumlenkschaufel feststehend angeordnet. Die Luftführungsschaufel hat einen in Achsrichtung der Rotorwelle gesehen kreisbogenförmigen Querschnitt und ist bevorzugt einstückig am hinteren Lagerschild angeordnet.

Der Wärmeentzug an den Bürsten kann gemaß einer bevorzugten Ausführungsform der Erfindung am wirksamsten mit Bürstenführungen aus Silikongummi erfolgen, die vom hinteren Lagerschild auf drei Seiten, mit Ausnahme der dem Rotor zugekehrten Seite, umschlossen sind. Auf dieser freien Seite sind die Bürstenführungen von einem Ringdeckel aus gut wärmeleitendem Material abgedeckt, der an das Gehäuserohr oder an das hintere Lagerschild wärmeleitend angekoppelt ist. Das hintere Lagerschild ist bevorzugt als Aluminium- oder Zink-Druckgußteil oder als Fließpreßteil ausgeführt und kann zusätzlich auf der Außenseite mit radialen Kühlrippen versehen sein.

Gemäß einer weiteren Ausführungsform der Erfindung werden die Bürstenführungen wie bisher kostensparend aus Blech gefertigt, wobei sie an ihrer dem Rotor zugekehrten Seite an einer Trägerplatine aus elektrisch isolierendem Material mit guter Wärmeleitfähigkeit befestigt sind. Mit ihrer dem hinteren Lagerschild zugekehrten Seite liegen die Bürstenführungen an diesem elektrisch isoliert aber mit gutem Wärmeübergang an.

### Zeichnung

Die Erfindung ist anhand von in der Zeichnung dargestellten Ausführungsbeispielen in der nachfolgenden Beschreibung näher erläutert. Es zeigen:
- Fig. 1 und 2: jeweils einen Längsschnitt eines Kühlerlüftermotors in langgestreckter Bauform, gemäß einem ersten und zweiten Ausführungsbeispiel,
- Fig. 3: eine Innenansicht des vorderen Lagerschilds im Motor gemäß Fig. 2,
- Fig. 4: einen Längsschnitt eines Kühlerlüftermotors in Kompaktbauweise,
- Fig. 5: eine vergrößerte Darstellung eines modifizierten Rotors im Kühlerlüftermotor nach Fig. 4,
- Fig. 6 7 und 8: jeweils einen Längsschnitt eines Kühlerlüftermotors in Kompaktbauweise gemäß dreier weiterer Ausführungsbeispiele.

### Beschreibung der Ausführungsbeispiele

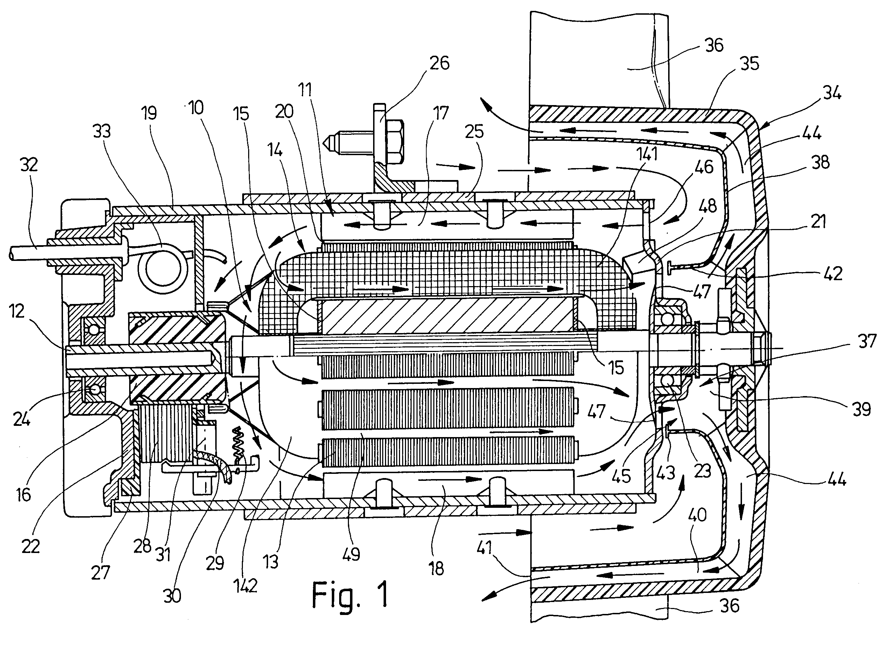

Der in Fig. 1 im Längsschnitt dargestellte Kühlerlüftermotor als Beispiel eines als Langmotor ausgeführten Kommutator-Kleinmotors weist in bekannter Weise einen Rotor 10 und einen den Rotor 10 konzentrisch umgebenden Stator 11 auf. Der Rotor 10 weist in bekannter Weise ein drehfest auf einer Rotorwelle 12 sitzendes Blechpaket 13 und eine in Axialnuten des Blechpakets 13 einliegende Ankerwicklung 14 auf, die am Blechpaket 13 stirnseitig mit vorderen und hinteren Wickelköpfen 14a bzw. 14b vorsteht. Die Ankerwicklung 14 liegt isoliert in den Axialnuten ein, wozu eine Maskenisolation 15 in das Blechpaket 13 von beiden Stirnseiten her eingeschoben ist, die sowohl die Nuten auskleidet als auch die Stirnseiten des Blechpakets 13 überzieht. Auf der Rotorwelle 12 ist nahe den hinteren Wickelköpfen 14b der Ankerwicklung 14 ein Kommutator 16 drehfest angeordnet, der hier als Trommelkommutator ausgebildet ist. Die Ankerwicklung 14 ist elektrisch mit den Kommutatorlamellen des Kommutators 15 verbunden.

Der zweipolig ausgebildete Stator 11 weist zwei Permanentmagnetpole 17,18 auf, die an der Innenwand eines Polrohrs 19 befestigt sind und mit dem Außenumfang des Rotors 10 einen axialen Arbeitsluftspalt 20 einschließen. Das als magnetischer Rückschluß dienende Polrohr 19 erstreckt sich über die axiale Gesamtlänge von Rotor 10 und Kommutator 16 und ist an seinen beiden Stirnenden von einem vorderen Lagerschild 21 und einem hinteren Lagerschild 22 abgeschlossen. Die beiden Lagerschilder 21,22 nehmen in jeweils einem Kugellager 23 bzw. 24 die Rotorwelle 12 auf. Das Polrohr 19 mit gegenüber seiner axialen Länge großem Durchmesser ist in einem zylinderförmigen Gehäuse 25 gehalten, an dem ein der Befestigung des Motors dienender Befestigungswinkel 26 angeschweißt ist.

An dem hinteren Lagerschild 22 sind eine der Anzahl der Permanentmagnetpole 17,18 entsprechende Zahl, hier also zwei, von Bürstenführungen 27 befestigt, deren Achsen radial ausgerichtet sind. Jede Bürstenführung 27 nimmt eine Kommutator- oder Kohlebürste 28 axial verschieblich auf, die stirnseitig von einer Bürstenandruckfeder 29 belastet ist, welche die Kohlebürste 28 radial an den Kommutator 16 andrückt. Die Bürstenführungen 27 sind aus isolierendem Material hergestellt, wobei die Stromzuführung zu der Kohlebürste 28 durch eine Bürstenlitze 30 erfolgt, die durch einen Radialschlitz 31 der Bürstenführung 27 hindurchragt und nach außen zu einem Anschlußstecker 32 geführt ist. In den Anschlußleitungen sind üblicherweise Entstördrosseln 33 und/oder Entstörkondensatoren eingebunden.

Auf dem aus dem vorderen Lagerschild 21 vorstehenden freien Wellenende der Rotorwelle 12 ist ein Lüfterrad 34 aus Kunststoff aufgesetzt. Das Lüfterrad 34 weist eine kappenartige Lüfternabe 35, die den vorderen Teil des Motors mit Abstand übergreift, und Lüfterflügel 36 auf, die von der Lüfternabe 35, vorzugsweise einstückig mit dieser, radial wegstreben.

Zur Optimierung der Wärmeabfuhr aus dem Motorinnenraum und von dort wärmemäßig hochbelasteten Bauteilen wird mittels eines von der Rotorwelle 12 angetriebenen Radialgebläses 37 der Luftaustausch im Motorinnenraum wesentlich intensiviert. Hierzu ist innerhalb der Lüfternabe 35 eine becher- oder topfförmige Kunststoffschale 38 mit Abstand von der Lüfternabe 35 so angeordnet, daß zwischen Kunststoffschale 38 und Nabengrund ein ringförmiger Strömungsraum 39 ausgebildet wird, der sich in einen zwischen den zylinderförmigen Seitenwänden von Kunststoffschale 38 und Lüfternabe 35 begrenzten ringförmigen Strömungskanal 40 fortsetzt, der seinerseits am Naben- bzw. Schalenrand, dort eine ringförmige Ausblasöffnung 41 des Radialgebläses 37 bildend, mündet. Mittig ist die Kunststoffschale 38 zu einem zur Rotorwelle 12 koaxialen Ansaugstutzen 42 ausgebildet, der bis dicht an das vordere Lagerschild 21 heranreicht und dort eine Ansaugöffnung 45 des Radialgebläses 37 mit gegenüber dem Lagerschild 21 rotierender Dichtung, die in Fig. 1 schematisch mit 43 angedeutet ist, bildet. In dem Strömungsraum 39 sind zwischen Nabengrund und Kunststoffschale 38 sich radial erstreckende Gebläseschaufeln 44 angeordnet, die in Umfangsrichtung gesehen äquidistant zueinander angeordnet sind.

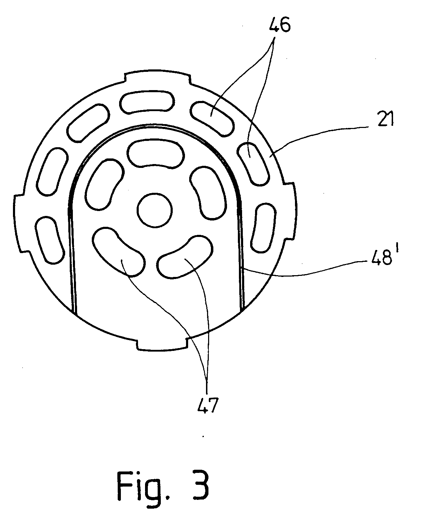

Im vorderen Lagerschild 21 sind innerhalb des von dem Ansaugstutzen 42 überdeckten Bereichs Abluftöffnungen 47 eingebracht, die äquidistant auf einen zur Rotorwelle 12 koaxialen Teilerkreis angeordnet sind (vergl. auch Fig. 3). Im vorderen Lagerschild 21 sind außerdem nahe dessen Außenrand, also dicht am Polrohr 19 Zuluftöffnungen 46 vorgesehen, die ebenfalls äquidistant auf einem Teilerkreis angeordnet sind, der etwas mehr als einen Halbkreis ausmacht (Fig. 3). In der in Fig. 1 und 3 dargestellten Motorgebrauchslage liegen dabei die Zuluftöffnungen 46 in dem oberen Bereich und in den beiden seitlichen Bereichen des vorderen Lagerschildes 21, fehlen jedoch in dem unteren Lagerschildbereich. Zur Abschirmung der Abluftöffnungen 47 gegenüber den Zuluftöffnungen 46 gegen unmittelbaren Luftaustausch strebt von der Innenseite des vorderen Lagerschildes 21 eine Trennwand 48 weg. Bei dem Motor in Fig. 1 ist die Trennwand 48 aus Weichkunststoff hergestellt, auf der Innenseite des vorderen Lagerschilds 21 befestigt und reicht bis zu den vorderen Wickelköpfen 14a der Ankerwicklung 14, wo sie schleifend anliegt. Bei der Drehung des Rotors 10 schleift sich diese Weichkunststoff-Trennwand 48 an den vorderen Wickelköpfen 14a ab, ohne diese zu beschädigen, so daß sie relativ dicht bis an die Wickelköpfe 14a heranreicht und dadurch eine ausreichende Lufttrennung garantiert, ohne zu enge Toleranzanforderungen an die vorderen Wickelköpfe 14a zu stellen.

Im Betrieb des Motors saugt das Radialgebläse 37 heiße Luft vom Motorinnenraum durch die rotorwellennahen Abluftöffnungen 47 im vorderen Lagerschild 21 an. Diese Warmluft wird über den Strömungsraum 39, dem Strömungskanal 40 und die Ausblasöffnung 41 an die Umgebung abgegeben. Die vom Radialgebläse 37 aus dem Motorinnenraum entzogene Luft wird durch Frischluft ersetzt, die über dem nahe dem Polrohr 19 liegenden Innenbereich der Lüfternabe zu den Zuluftöffnungen 46 strömt und über diese in den Motorinnenraum einströmt. Die einströmende Luft, die in Fig. 1 ebenso wie die Abluft durch entsprechende Pfeile gekennzeichnet ist, wird durch die oberen Magnetpolzwischenräume zum Kommutatorbereich geführt, wobei sie sich erwärmt. Die erwärmte Luft gelangt über die unteren Magnetpolzwischenräume zurück zu dem vorderen Lagerschild 21 und wird hier wiederum über die Abluftöffnungen 47 abgesaugt. Zusätzlich können - wie in Fig. 1 unten angedeutet ist - im Blechpaket 13 des Rotors 10 noch längsdurchgehende Luftkanäle 49 in Form von Axialbohrungen vorgesehen werden, durch die dann die Luft aus dem Kommutatorbereich ebenfalls zu dem vorderen Lagerschild 21 strömt.

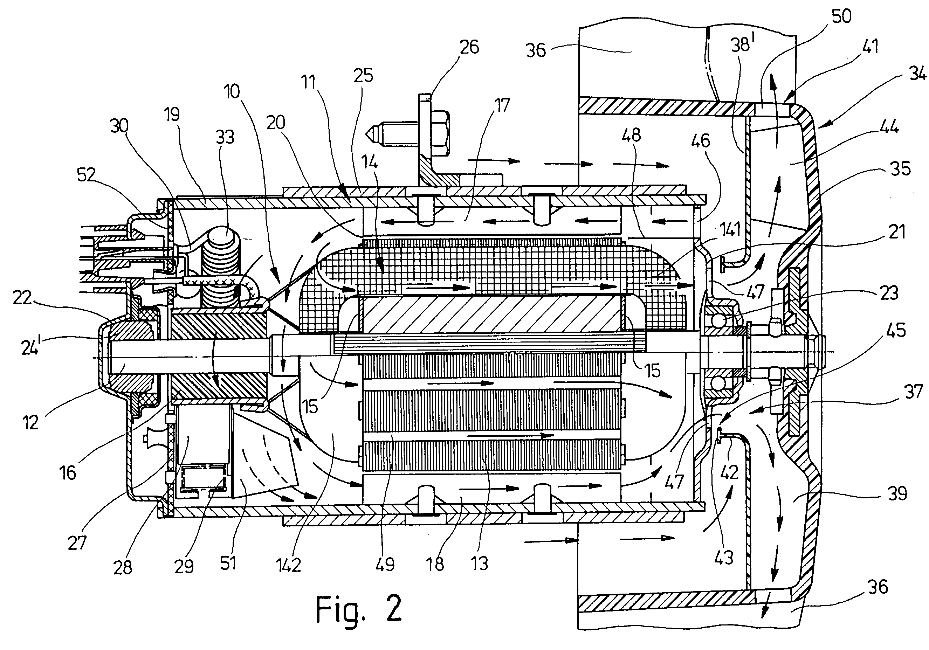

Der in Fig. 2 im Längsschnitt dargestellte Kühlerlüftermotor ist gegenüber dem beschriebenen nur gering modifiziert, so daß gleich Bauteile in beiden Figuren mit gleichen Bezugszeichen versehen sind. Eine erste Modifiaktion besteht darin, daß die von der Lüfternabe 35 aufgenommene Kunststoffschale 38' zur Realsierung des Radialgebläses 37 nicht becherförmig sondern deckelförmig ausgebildet ist und sich parallel zum Nabengrund bis hin an die Innenseite der zylinderfömrigen Seitenwand der Lüfternabe 35 erstreckt. Nach wie vor schließt die Kunststoffschale 38' mit dem Nabengrund der Lüfternabe 35 den Strömungsraum 39 ein, in welchem in gleicher Weise die Gebläseschaufeln 44 ausgebildet sind. Mittig ist wiederum der zur Rotorwelle 12 koaxiale Ansaugstutzen 42 vorhanden, der nach Art einer rotierenden Dichtung 43 am vorderen Lagerschild 21 anliegt. Wegen des hier fehlenden Strömungskanals 40 wird die Ausblasöffnung 41 des Radialgebläses 37 von Radialbohrungen 50 gebildet, die im Bereich des Strömungsraums 39 in die Nabenseitenwand eingebracht sind. Die Radialbohrungen 50 können dabei in Drehrichtung des Lüfterrades 34 gesehen sowohl vor als auch hinter den Lüfterflügeln 36 liegen. Da diese Radialbohrungen 50 in der Niedrigstdruckzone an der Lüfternabe 35 liegen, wird die Luftzirkulation durch den Motorinnenraum wesentlich verstärkt.

Die Trennwand 48' zur Abschirmung von Zuluftöffnungen 46 und Abluftöffnungen 47 im vorderen Lagerschild 21 gegen unmittelbaren Luftaustausch ist hier mit U-förmigem Verlauf auf der Innenseite des vorderen Lagerschildes 21 befestigt (Fig. 3) und reicht über die vorderen Wickelköpfe 14a der Ankerwicklung 14 hinweg bis nahe zum vorderen Stirnrand des Blechpakets 13 des Rotors 10. Die Trennwand 48' ist dabei so gelegt, daß in der Gebrauchslage des Motors der U-Grund im oberen Bereich des vorderen Lagerschildes 21 liegt.

An den Bürstenführungen 27 sind Kühlbleche 51 angeordnet, die radial ausgerichtet sind und sich bis hin zu den hinteren Wickelköpfen 14b der Ankerwicklung 14 erstrecken. Die Kühlbleche 51 sind als Verlängerung der hier aus Blech bestehenden Bürstenführungen 27 gefertigt. Die Bürstenführungen 27 sind an einem Bürstenträger 52 aus Isoliermaterial gehalten, der zwischen dem hinteren Lagerdeckel 22 und dem Polrohr 19 eingespannt ist.

Bei Kleinmotoren, die Öffnungen am hinteren Ende haben dürfen, können die Zuluftöffnungen 46 auch im hinteren Lagerschild 22 angerechnet werden, so daß solche im vorderen Lagerschild 21 ebenso entfallen wie die Trennwand 48 bzw. 48'.

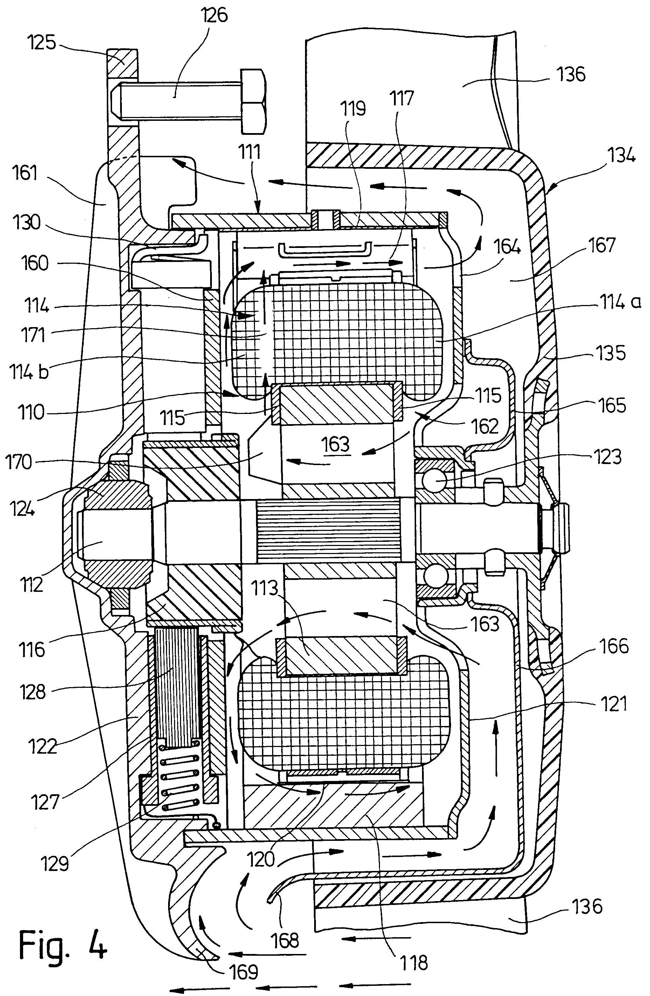

Der in Fig. 4 im Längsschnitt zu sehende Kühlerlüftermotor ist als Kompaktmotor ausgebildet, bei dem das Verhältnis von Durchmesser zur axialen Länge größer als 1 ist. Der Kühlerlüftermotor weist einen Rotor 110 mit Rotorwelle 112 auf, auf welcher ein Kommutator 116 drehfest sitzt. Der Rotor 110 besteht in üblicher Weise aus einem drehfest auf der Rotorwelle 112 sitzenden Blechpaket 113, in welchem eine Ankerwicklung 114 einliegt, die mit einem vorderen Wickelkopf 114a und einem hinteren Wickelkopf 114b über die Stirnseiten des Blechpakets 113 vorsteht. Die an dem Kommutator 116 angeschlossene Ankerwicklung 114 ist in hier nicht dargestellten Längsnuten des Blechpakets 113 isoliert eingelegt, wozu eine zweiteilige Maskenisolation 115 dient, die von beiden Stirnseiten des Blechpakets 113 her in die Nuten eingeschoben ist. Die Maskenisolation 115 kleidet einerseits die Nuten aus und überdeckt andererseits die Stirnseiten des Blechpakets 113.

Der den Rotor 110 konzentrisch umschließende Stator 111 weist ein Polrohr 119 auf, an dessen Innenfläche mehrere Permanentmagnetpole befestigt sind. Bei der hier bevorzugten zweipoligen Ausbildung des Motors sind zwei Permanentmagnetpole 117 und 118 vorgesehen, die unter Belassung eines Arbeitsluftspaltes 120 bis an den Umfang des Blechpakets 113 heranreichen. Das Polrohr 119 ist von einem vorderen Lagerschild 121 und einem hinteren Lagerschild 122 stirnseitig abgeschlossen. Jedes Lagerschild 121 bzw. 122 trägt ein Lager zur Aufnahme der Rotorwelle 112, wobei das Lager im vorderen Lagerschild 121 als Kugellager 123 und das Lager im hinteren Lagerschild 122 als Gleitlager 124 ausgebildet ist. Das hintere Lagerschild 122 ist als Aluminium- oder Zink-Druckgußteil ausgeführt und dient zugleich der Befestigung des Motors im Einbauort, wozu es mindestens ein über das Polrohr 119 radial vorstehendes Befestigungsauge 125 trägt, durch welches eine Befestigungsschraube 126 durchgesteckt werden kann. Das hintere Lagerschild 122, das auch als Fließpreßteil ausgeführt werden kann, dient zugleich als Bürstenträger für die Kommutator- oder Kohlebürsten 128 des Motors. Diese Kohlebürsten 128, deren Anzahl gleich der Anzahl der Permanentmagnetpole 117,118 ist, sind in je einer Bürstenführung 127 axial verschieblich geführt. Da der Kommutator 116 hier als Trommelkommutator ausgeführt. ist, sind die Achsen der Bürstenführungen 127 radial ausgerichtet. Die Bürstenführungen 127 sind aus Silikongummi gefertigt und werden vom hinteren Lagerschild 122 auf drei Seiten, mit Ausnahme der dem Rotor 110 zugekehrten Seite, umschlossen. Die freie Seite ist von einem Ringdeckel 160 aus gut wärmeleitendem Material abgedeckt, der bis zu dem Polrohr 119 reicht. Die Kohlebürsten 128 sind durch als Druckfedern ausgebildete Bürstenandruckfedern 129 in Radialrichtung auf den Kommutator 116 aufgedrückt. Zur Stromzuleitung zu den Kohlebürsten 128 dienen Bürstenlitzen 130, die zu einem hier nicht dargestellten Anschlußstecker geführt sind. Auf der Außenseite des hinteren Lagerschilds 122 sind noch Kühlrippen 161 angeformt, die sich in Radialrichtung erstrecken.

Auf dem aus dem vorderen Lagerschild 121 vorstehenden Wellenende der Rotorwelle 112 ist ein Lüfterrad 134 aus Kunststoff drehfest aufgesetzt, das mit einer kappenartigen Lüfternabe 135 das Polrohr 119 mit Abstand über nahezu dessen halbe Axiallänge übergreift. Von der Lüfternabe 135 streben vorzugsweise einstückig Lüfterflügel 136 radial nach außen ab.

Zum optimalen Abführen der Wärme aus dem Motorinnenraum und dort vor allem von hochbelasteten Bauteilen sind verschiedene konstruktive Maßnahmen durchgeführt, die alle der Intensivierung des Luftaustausches im Motorinnenraum dienen und nachfolgend im einzelnen beschrieben sind. In dem vorderen Lagerschild 121 sind zunächst nahe der Rotorwelle 112 Zuluftöffnungen 162 eingebracht und im Blechpaket 113 des Rotors 110 nahe der Rotorwelle 112 längsdurchgehende Luftkanäle 163 vorgesehen. Des weiteren sind im vorderen Lagerschild 121 nahe dem Polrohr 119 Abluftöffnungen 164 eingebracht, und zwar nur in einem Sektor des vorderen Lagerschilds 121, der in Gebrauchslage des Motors oben liegt und einen Sektorwinkel von etwas mehr als 180° aufweist. Die Zuluftöffnungen 162 sind dabei auf einem zur Rotorwelle 112 konzentrischen inneren Teilerkreis und die Abluftöffnungen 164 auf einem äußeren konzentrischen Kreisbogen verteilt angeordnet. Die Innenseite des vorderen Lagerschilds 121 ist glattflächig ausgebildet.

Zur Trennung der Zu- und Abluftöffnungen 162,164 auf der Außenseite des vorderen Lagerschilds 121 ist eine die Zuluftöffnungen 162 überdeckende ringförmige Haube 165 auf das vordere Lagerschild 121 aufgesetzt, die einen in Radialrichtung wegstrebenden Luftzuführungskanal 166 besitzt, der zu einem Bereich des vorderen Lagerschildes 121 führt, in dem keine Abluftöffnungen 164 vorhanden sind. Dies ist in der Gebrauchslage des Motors der untere Bereich, so daß, wie in Fig. 4 zu sehen ist, der Luftführungskanal 166 radial nach unten verläuft. Die Haube 165 mit Luftzuführungskanal ist in dem zwischen dem Nabengrund der Lüfternabe 135 und dem vorderen Lagerschild 121 vorhandenen Zwischenraum 167 aufgenommen, wobei der Luftführungskanal 166 unten nahe der zylinderförmigen Seitenwand der Lüfternabe 135 rechtwinklig umgebogen ist und in dem zwischen Polrohr 119 und Lüfternabe 135 verbleibenden Ringraum verläuft. Er mündet am Nabenrand, wobei er in ein sich axial erstreckendes, bogenförmiges Luftleitelement 168 ausläuft. Der Luftzuführungskanal 166 wird durch eine tunnelförmig gewölbte Kunststoffwand gebildet, die einstückig in die ringförmige Haube 165 übergeht. Im Axialabstand von der Mündung des Luftzuführungskanals 166 ist eine Luftumlenkschaufel 169 an dem hinteren Lagerschild 122 ausgeformt, die radial in den von den Lüfterflügeln 136 erzeugten Axialluftstrom hineinragt. Die Luftumlenkschaufel 169, die in Achsrichtung der Rotorwelle 112 gesehen einen etwa halbkreisförmigen Querschnitt aufweist, verursacht einen Staudruck, der die Luft zu den Zuluftöffnungen 162 fördert.

Bei laufendem Motor wird von der Saugwirkung des Rotors 110 Luft angesaugt, die über den Luftzuführungskanal 166, die ringförmige Haube 165 und die Zuluftöffnungen 162 in den Motorinnenraum einströmen. Diese Luft spaltet sich im Motorinnenraum in zwei scheibenförmige, radial verlaufende Luftströme auf der Vorder- und Hinterseite des Rotors 110 auf, die umso stärker sind, je besser die Luft in eine Drehbewegung versetzt wird. Die hintere Luftscheibe kommt dadurch zustande, daß die wellennah einströmende Luft durch die wellennahen Luftkanäle 163 auf die Hinterseite des Rotors 110 strömt. Um die Luft in gute Drehbewegung zu versetzen, sind auf der hinteren Stirnseite des Blechpakets 113 kleine Radialflügel 170 angeordnet. Diese Radialflügel 170 sind unterhalb des hinteren Wickelkopfes 114b angeordnet und bevorzugt aus der Maskenisolation 115 ausgeformt. Zusätzlich können in dem auf der Stirnseite des Blechpakets 113 liegende Isolationsstern der Maskenisolation 115 querschnittskleine Luftkanäle 171 eingeformt sein, wie diese in Fig. 4 auf der hinteren Stirnseite des Rotors 110 schematisch angedeutet sind. Die angesaugte Luft wird nun auf beiden Seiten des Rotors 110 geschleudert und erwärmt. Auf der Vorderseite des Rotors 110 strömt die Luft dann unmittelbar über die Abluftöffnungen 164 im vorderen Lagerschild 121 ab. Von der hinteren Seite des Rotors 110 gelangt die erwärmte Luft über den Arbeitsluftspalt 120 sowie durch die Zwischenräume zwischen den Permanentmagnetpolen 117,118 auf die Vorderseite des Rotors 110 und strömt hier ebenfalls über die Abluftöffnungen 164 ab. Zwecks einer guten Ausbildung der hinteren scheibenförmigen Luftbewegung ist der die Bürstenführungen 127 abdeckende Ringdeckel 160, der bevorzugt aus Aluminiumblech ausgestanzt und an das hintere Lagerschild 122 angenietet wird, möglichst glattflächig gestaltet und nahe den hinteren Wicklungsköpfe 114b angeordnet. Zur Abkühlung der zwischen den Kohlebürsten 128 angeordneten Entstörmittel können zusätzlich Luftschlitze in dem Ringdeckel 160 vorgesehen werden.

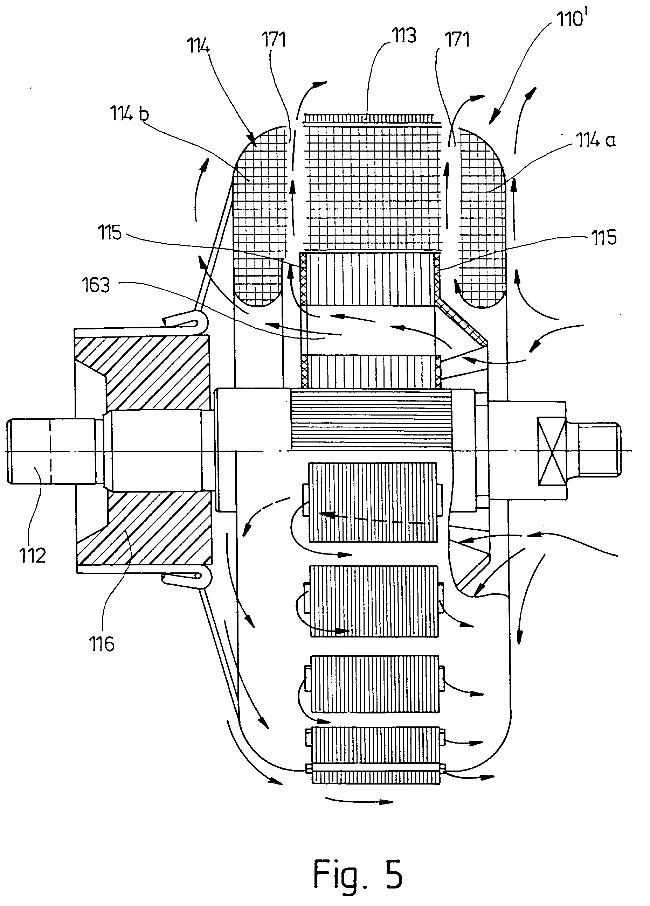

In Fig. 5 ist ein modifizierter Rotor 110' dargestellt, der in dem Motor gemäß Fig. 4 eingesetzt werden kann. Auf der dem Lagerschild 121 zugekehrten vorderen Stirnseite des Blechpakets 113 ist ein zum vorderen Lagerschild 121 sich hin verjüngender, zur Rotorwelle 112 koaxialer Trichter 172 aus der Maskenisolation 115 ausgeformt. Der Trichter 172 überdeckt mit seiner durchmessergrößeren Stirnseite die Einlaßöffnungen der wellennahen axialen Luftkanäle 163. In dem Trichter 172 sind Luftleitstege 173 derart ausgebildet, daß die in den Trichter 172 von den Zuluftöffnungen 162 im Lagerschild 121 her einströmende Luft in Drehrichtung versetzt wird. Radial nach außen versetzt von dem Trichter 172 sind in der Maskenisolation 115 auf der Vorderseite des Blechpakets 113 ebenfalls radiale Luftkanäle 171 mit kleinem Querschnitt ausgeformt. Diese Luftkanäle 171 haben die gleiche Form wie die auf der Rückseite des Blechpakets 113 in der Maskenisolation 115 ausgebildeten radialen Luftkanäle 171, wie diese zu Fig. 4 beschrieben sind.

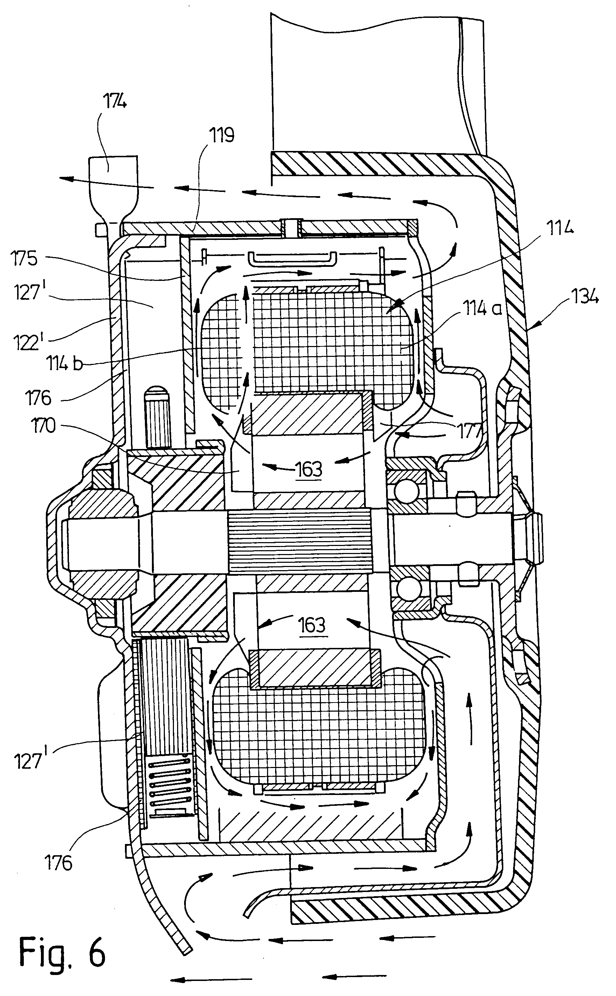

Der in Fig. 6 im Längsschnitt dargestellte Kühlerlüftermotor ist weitgehend identisch mit dem in Fig. 4 zu sehenden und vorstehend beschriebenen Kommutator-Kleinmotor. Er ist lediglich im Bereich des hinteren Lagerschildes 122' und bezüglich der Ausbildung der Bürstenführungen 127' modifiziert. In Fig. 6 sind daher nur die Bauteile mit Bezugszeichen versehen, die nachfolgend angesprochen sind. Das hintere Lagerschild 122' ist hier aus Blech gefertigt und weist über das Polrohr 119 radial vorstehende Blechlappen 174 auf, die durch eine 90° Drehung in Achsrichtung des Rotors 110 ausgerichtet sind und als Kühlrippen in den vom Lüfterrad 134 erzeugten Luftstrom hineinragen. Die Bürstenführungen 127' sind ebenfalls aus Blech gefertigt und an ihrer dem Rotor 110 zugekehrten Seite an einer Trägerplatine 175 aus elektrisch isolierendem Material mit guter Wärmeleitfähigkeit befestigt. Mit ihrer gegenüberliegenden Seite liegen die Bürstenführungen 127' elektrisch isoliert, aber mit gutem Wärmeübergang an dem Lagerschild 122' an, wozu zwischen den Bürstenführungen 127' und dem hinteren Lagerschild 122' eine wärmeübertragende weiche Schicht 176, lose oder an den Bürstenführungen 127' bzw. an dem Lagerschild 122' haftend, angeordnet ist. Die metallischen Bürstenführungen 127' leiten die Bürstenverluste durch diese weiche Schicht 176 an das hintere Lagerschild 122' weiter, das die Wärme an die Umgebungsluft abgibt. In dem Zwischenraum zwischen der Trägerplatine 175 und dem hinteren Lagerschild 122' werden wiederum die Entstörbauelemente angeordnet. Die Trägerplatine 175 ist möglichst nahe an den hinteren Wickelköpfen 114b der Ankerwicklung 114 angeordnet und auf der der Ankerwicklung 114 zugekehrten Seite glattflächig ausgebildet.

Zusätzlich zu den Radialflügeln 170 auf der hinteren Stirnseite des Blechpakets 113 sind auch auf der Vorderseite des Rotors 110 an der Stirnseite des Blechpakets 113 Radialflügel 177 durch Ausformung aus der Maskenisolation 115 ausgebildet. Diese gleichmäßig über den Umfang verteilte Radialflügel 177 sind dicht unterhalb der vorderen Wickelköpfe 114a angeordnet und enden vor den Einlaßöffnungen der axialen Luftkanäle 163.

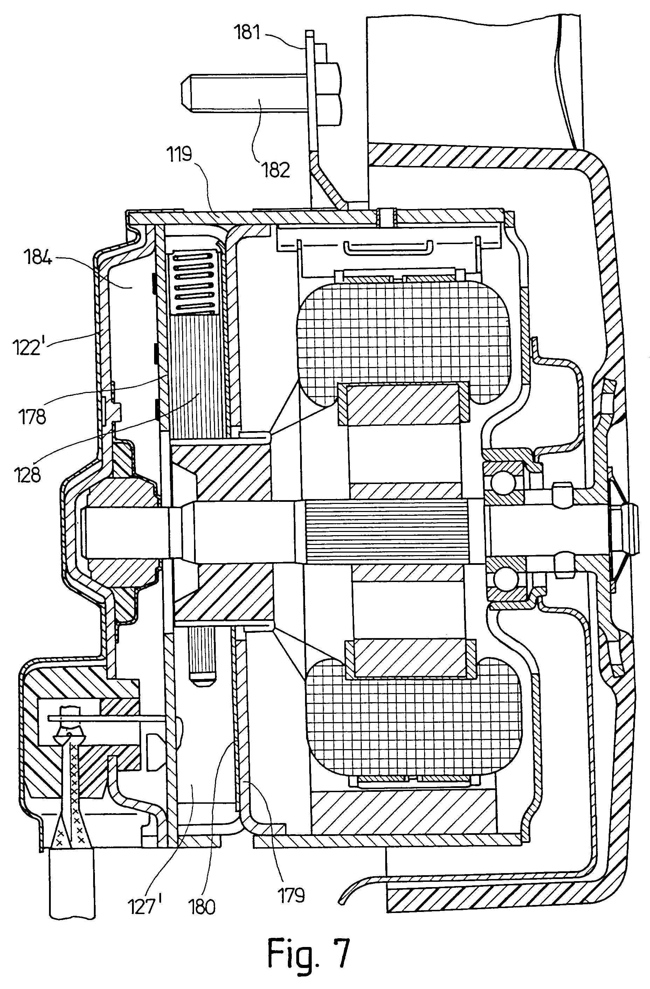

Bei dem Kühlerlüftermotor in Fig. 7 sind das hintere Lagerschild 122' und die Bürstenführungen 127' aus Blech gefertigt. Letztere sind wiederum an einer Trägerplatine 178 aus Isoliermaterial befestigt, die aber im Gegensatz zu Fig. 6 mit ihrer von den Bürstenführungen 127' abgekehrten Seite dem hinteren Lagerschild 122 zugekehrt und an diesem befestigt ist. Auf der dem Rotor 110 zugekehrten Seite sind die Bürstenführungen 127' von einem glattflächigen Ringdeckel 179 überdeckt, der unter Zwischenlage einer weichen Isolierschicht 180 auf den Bürstenführungen 127' aufliegt und an dem Polrohr 119 mechanisch und thermisch angekoppelt ist. Anstelle eines geschlossenen Ringdeckels 179 können auch Deckelsegmente in gleicher Weise angeordnet werden. Die elektrischen Zuleitungen zu den Kohlebürsten 128 sowie die Entstörmittel sind in dem zwischen dem hinteren Lagerschild 122' und der Trägerplatine 178 verbleibenden Zwischenraum 184 angeordnet.

Bei allen Motoren mit aus Blech gefertigtem hinteren Lagerschild 122' gemäß Fig. 6 und 7 erfolgt die Motorbefestigung über das Polrohr 119, an dem ein Befestigungswinkel 181 angeschweißt ist, der mindestens eine Durchstecköffnung für eine Befestigungsschraube 182 trägt.

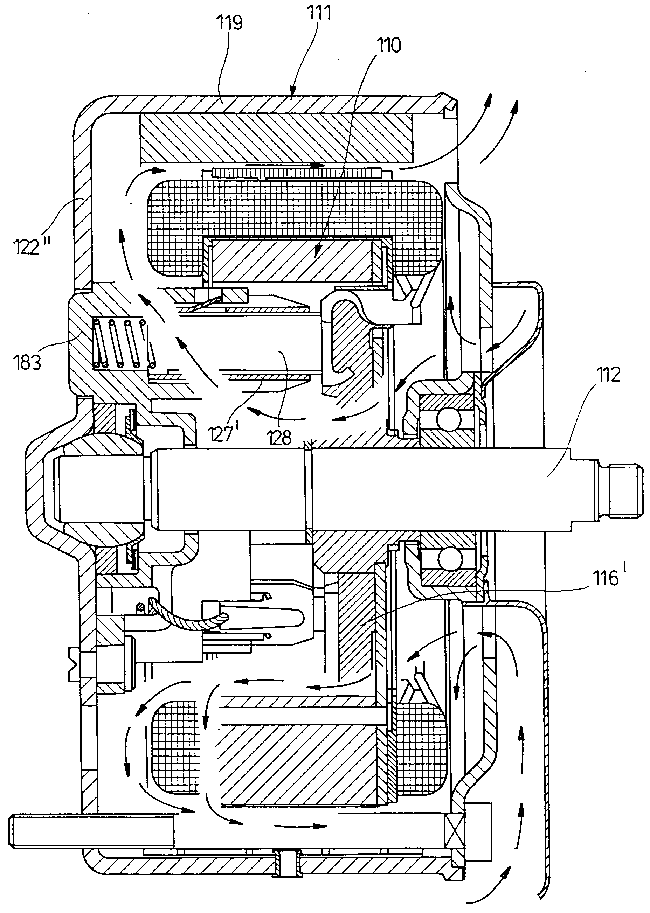

In Fig. 8 ist schließlich noch ein Kommutator-Kleinmotor in Kompaktbauweise im Längsschnitt dargestellt, der nicht, wie die vorstehend beschriebenen Kleinmotoren mit einem Trommelkommutator, sondern mit einem Scheiben- oder Plattenkommutator 116' ausgerüstet sind. Auch bei diesem Kommutator-Kleinmotor sind alle vorstehend beschriebenen Konstruktionsprinzipien angewandt, die zu einer Intensivierung des Luftaustauschs im Motorinnenraum und damit zu einer drastisch verbesserten Wärmeabfuhr führen. Aufgrund dieser verbesserten Wärmeabführung kann die Leistung des Motors bei unveränderter Auslegung gesteigert werden.

Bei dem ebenfalls in Kompaktbauweise, d.h. mit großem Verhältnis von Durchmesser zur axialen Länge, ausgeführten Kommutator-Kleinmotor sitzt der Plattenkommutator 116' im Innern des Blechpakets 113 drehfest auf der Rotorwelle 112. Die Bürstenführungen 127' mit darin einliegenden Kohlebürsten 128 sind axial ausgerichtet. Die aus Blech gefertigten Bürstenführungen 127' sind in einem Bürstenhalter 183 aus Isoliermaterial aufgenommen, der stirnseitig an dem hinteren Lagerschild 122'' gehalten ist. Das Polrohr 119 und das hintere Lagerschild 122 sind einstückig ausgeführt. Im übrigen entspricht Aufbau und Funktionsweise dieses Kleinmotors mit Plattenkommutator 116' den vorstehend beschriebenen Kühlerlüftermotoren, so daß insoweit auf die vorstehende Beschreibung verwiesen wird.

## Patentansprüche

1. Kommutator-Kleinmotor, insbesondere Kühlerlüftermotor für Kraftfahrzeuge, mit einem Rotor, der ein auf eine Rotorwelle drehfest sitzendes Blechpaket und eine darin mit überstehenden Wickelköpfen einliegende, an einem auf der Rotorwelle drehfest sitzenden Kommutator elektrisch angeschlossene Ankerwicklung aufweist, mit einem sich über Rotor und Kommutator erstreckenden, diese umschließenden Polrohr, das im Bereich des Rotors einen Magnetpole tragenden Stator bildet und stirnseitig mit einem jeweils ein Lager für die Rotorwelle enthaltenden vorderen und hinteren Lagerschild abgeschlossen ist, und mit nahe dem hinteren Lagerschild plazierten Bürstenführungen für an den Kommutator mittels Bürstenandruckfedern angedrückte Kommutatorbürsten, dadurch gekennzeichnet, daß bei einem im Verhältnis zum Durchmesser langen Polrohr (19) in dem vom Kommutator (16) abgekehrten vorderen Lagerschild (21) nahe der Rotorwelle (19) Abluftöffnungen (47) eingebracht sind, die von einer zur Rotorwelle (19) koaxialen Ansaugöffnung (45) eines von der Rotorwelle (19) angetriebenen Radialgebläses (37) überdeckt sind, und daß in wenigstens einem der Lagerschilde (21,22) und/oder im Polrohr Zuluftöffnungen (46) vorgesehen sind.

2. Motor nach Anspruch 1, dadurch gekennzeichnet, daß die Zuluftöffnungen (46) im vorderen Lagerschild (21) nahe dem Polrohr (19) angeordnet sind und auf einem zu der Anordnung der Abluftöffnungen (47) koaxialen Teilerkreis liegen und daß von der Innenseite des vorderen Lagerschilds (21) eine die Zu- und Abluftöffnungen (46,47) gegen unmittelbaren Luftaustausch gegeneinander abschirmende Trennwand (48) wegstrebt.

3. Motor nach Anspruch 2, dadurch gekennzeichnet, daß die Zuluftöffnungen (46) in dem in der Motorgebrauchslage oberen und seitlichen Bereich des vorderen Lagerschilds (21) liegen.

4. Motor nach Anspruch 2 oder 3, dadurch gekennzeichnet, daß die Trennwand (48) aus Weichkunststoff hergestellt und auf der Innenseite des vorderen Lagerschilds (21) befestigt ist und daß die Weichkunststoff-Trennwand (48) bis zu den vorderen Wickelköpfen (14a) der Ankerwicklung (14) reicht und an diesen schleifend anliegt.

5. Motor nach Anspruch 3, dadurch gekennzeichnet, daß die Trennwand (48') mit U-förmigem Verlauf auf der Innenseite des vorderen Lagerschilds (21) befestigt ist, wobei der U-Grund im oberen Bereich des vorderen Lagerschilds (21) liegt, und daß die Trennwand (48') über die vorderen Wickelköpfe (14a) hinweg bis zum Blechpaket (13) hin reicht.

6. Motor nach einem der Ansprüche 1 - 5, dadurch gekennzeichnet, daß an den Bürstenführungen (27) radial zur Rotorachse ausgerichtete, vorzugsweise mit diesen einstückige Kühlbleche (51) angeordnet sind, die sich in Achsrichtung des Rotors (10) bis nahe an die hinteren Wickelköpfe (14b) der Ankerwicklung (14) erstrecken.

7. Motor nach einem der Ansprüche 1 - 6, mit einem auf dem aus dem vorderen Lagerschild vorstehenden Wellenende der Rotorwelle drehfest sitzenden Lüfterrad, das eine das Polrohr kappenartig mit Abstand übergreifende Lüfternabe und davon radial wegstrebende Lüfterflügel aufweist, dadurch gekennzeichnet, daß zur Realisierung des Radialgebläses (37) am Nabengrund der Lüfternabe (35) mit Abstand von diesem eine Schale (38;38'), vorzugsweise aus Kunststoff, angeordnet ist, die mit der Lüfternabe (35) einen mit einer Ausblasöffnung (41) versehenen Strömungsraum (39) einschließt und mittig zu einem zur Rotorwelle (12) koaxialen Ansaugstutzen (42) ausgeformt ist, der die Ansaugöffnung (45) des Radialgebläses (36) umschließend nach Art einer rotierenden Dichtung an dem vorderen Lagerschild (21) anliegt, und daß im Strömungsraum (39) zwischen Schale (38) und Nabengrund sich radial erstreckende, in Umfangsrichtung äqudistant angeordnete Gebläseschaufeln (44) gehalten sind.

8. Motor nach Anspruch 7, dadurch gekennzeichnet, daß die Schale (38) topfartig derart ausgebildet ist, daß zwischen der zylinderförmigen Topfseitenwand und der zylinderförmigen Nabenseitenwand ein mit dem Strömungsraum (39) in Verbindung stehender Ringraum (40) entsteht, dessen Mündung am Naben- und Schalenrand die Ausblasöffnung (41) des Radialgebläses (37) bildet.

9. Motor nach Anspruch 7, dadurch gekennzeichnet, daß die Schale (38') sich etwa parallel zum Nabengrund bis zu der zylinderförmigen Nabenseitenwand erstreckt und dort befestigt ist und daß die Ausblasöffnung (41) des Radialgebläses (37) von Radialbohrungen (50) gebildet ist, die im Bereich des Strömungsraums (39) in die Nabenseitenwand eingebracht sind.

10. Motor nach einem der Ansprüche 1 - 9, dadurch gekennzeichnet, daß in dem Blechpaket (13) des Rotors (10) längsdurchgehende Luftkanäle (49) vorgesehen sind.

11. Kommutator-Kleinmotor nach dem Oberbegriff des Anspruchs 1, dadurch gekennzeichnet, daß bei einem im Verhältnis zum Durchmesser kurzen Polrohr (119) in dem vom Kommutator (116) abgekehrten vorderen Lagerschild (121) nahe der Rotorwelle (112) Zuluftöffnungen (166) eingebracht und im Blechpaket (113) des Rotors (110) nahe der Rotorwelle (112) längsdurchgehende Luftkanäle (163) vorgesehen sind und daß in einem Sektor des vorderen Lagerschilds (121) nahe dem Polrohr (119) Abluftöffnungen (164) eingebracht sind, die gegenüber den benachbarten Zuluftöffnungen (162) gegen unmittelbaren Luftaustausch abgeschirmt sind.

12. Motor nach Anspruch 11, dadurch gekennzeichnet, daß die Zuluftöffnungen (162) auf einem zur Rotorwelle (112) konzentrischen inneren Teilerkreis und die Abluftöffnungen (164) in einem in der Motorgebrauchslage oberen Sektor von etwa 180° Sektorwinkel auf einem äußeren Kreisbogen verteilt angeordnet sind.

13. Motor nach Anspruch 11 oder 12, dadurch gekennzeichnet, daß auf der dem vorderen Lagerschild (121) zugekehrten Stirnseite des Blechpakets (113) ein zum vorderen Lagerschild (121) sich verjüngender, zur Rotorwelle (112) koaxialer Trichter (172) angeordnet ist, der mit seiner durchmessergrößeren Stirnseite die Einlaßöffnungen der rotorwellennahen, axialen Luftkanäle (163) überdeckt.

14. Motor nach Anspruch 13, dadurch gekennzeichnet, daß in dem Trichter (172) Luftleitstege (173) derart ausgebildet sind, daß die an der durchmesserkleineren Seite des Trichters (172) einströmende Luft in Drehrichtung versetzt wird.

15. Motor nach Anspruch 11 oder 12, dadurch gekennzeichnet, daß auf mindestens einer der beiden Stirnseiten des Blechpakets (113) unterhalb der Wickelköpfe (114a,114b) Radialflügel (177,170) über den Umfang um gleiche Umfangswinkel verteilt angeordnet sind.

16. Motor nach einem der Ansprüche 11 - 15, dadurch gekennzeichnet, daß auf den Blechpaketstirnseiten im Bereich der Wickelköpfe (114a,114b) radiale Luftführungskanäle (171) ausgebildet sind, die am Außenumfang des Blechpakets (113) münden.

17. Motor nach einem der Ansprüche 13 - 16, dadurch gekennzeichnet, daß der Treichter (172) mit Luftleitstegen (173) bzw. die Radialflügel (170,177) bzw. die radialen Luftführungskanäle (171) aus der die Stirnseite des Blechpakets (113) mindestens teilweise überdeckenden Ankerwicklungsisolation (115) ausgeformt sind.

18. Motor nach einem der Ansprüche 11 - 17, dadurch gekennzeichnet, daß zur Trennung der Zu- und Abluftöffnungen (162, 164) auf der Außenseite des vorderen Lagerschilds (121) eine die Zuluftöffnungen (162) überdeckende, ringförmige Haube (165) aufgesetzt ist, die einen in Radialrichtung sich erstreckenden, zu einem von den Abluftöffnungen (164) abgekehrten Bereich des vorderen Lagerschilds (121) führenden Luftzuführungskanal (166) aufweist.

19. Motor nach Anspruch 18 mit einem auf dem aus dem vorderen Lagerschild vorstehenden Wellenende der Rotorwelle drehfest sitzenden Lüfterrad, das eine das Polrohr kappenartig mit Abstand übergreifende Lüfternabe und davon radial wegstrebende Lüfterflügel aufweist, dadurch gekennzeichnet, daß die Haube (165) mit Luftzuführungskanal (166) in dem zwischen dem Nabengrund der Lüfternabe (135) und dem vorderen Lagerschild (121) vorhandenen Zwischenraum (167) aufgenommen ist und der Luftzuführungskanal (166) nach axialer Umlenkung am Rand der Lüfternabe (135) mündet.

20. Motor nach Anspruch 19, dadurch gekennzeichnet, daß im Axialbestand von der Mündung des Luftzuführungskanals (166) eine in den von Lüfterflügeln (136) erzeugten Axialluftstrom radial hineinragende Luftumlenkschaufel (169) feststehend angeordnet ist, die vorzugsweise einen in Achsrichtung des Rotors (12) gesehen halbkreisförmigen Querschnitt aufweist.
